# FASCICULE DE BREVET EUROPEEN

(11) **EP 3 758 905 B1**
(45) Date de publication et mention de la délivrance du brevet: **03.09.2025**
(21) Numéro de dépôt: 19708463.5
(22) Date de dépôt: 27.02.2019
(51) Int. Cl.: B29C 43/52, B29C 43/26, B29C 43/28, B29K 105/26, B29L 7/00, B29L 31/10

(54) **MATELAS EN MATIÈRE THERMOPLASTIQUE, PROCÉDÉ POUR SA FABRICATION ET UTILISATIONS DE CELUI-CI**
MATTE AUS THERMOPLASTISCHEM MATERIAL, VERFAHREN ZUR HERSTELLUNG DERSELBEN UND IHRE VERWENDUNG
THERMOPLASTIC MATERIAL MAT, PROCESS FOR ITS MANUFACTURING AND USES THEREOF

(30) Priorité: 01.03.2018 LU 100718
(43) Date de publication de la demande: 06.01.2021
(73) Titulaire: CRISTALUX INTERNATIONAL SÀRL, 1630 Luxembourg (LU); Vieslet, Jean-Paul, 4000 Liège (BE)
(72) Inventeur: VIESLET, Jean-Paul, 4000 Liège (BE)
(74) Mandataire: ARC-IP
(86) Numéro de dépôt international: PCT/EP2019/054827
(87) Numéro de publication internationale: WO 2019/166474

(56) Documents cités:
- WO-A1-2016/055414
- WO-A1-94/21435
- DE-A1- 4 117 797
- JP-A- H0 390 337
- US-A- 5 258 085

## Description

La présente invention est relative à un matelas en matière plastique notamment de recyclage, de rejet ou de rebut, qui peut être utilisé tel quel ou coupé et/ou œuvré et/ou assemblé en blocs ou matelas de rigidité contrôlée monocouche ou multicouches, de dimensions voulues. Elle concerne encore un procédé, notamment un procédé en continu, pour la fabrication d'un tel matelas ainsi que des utilisations de celui-ci.

L'accumulation de déchets de matières plastiques devient de plus en plus importante et la pollution notamment des océans prend des dimensions telles qu'on parle d'un septième continent. On retrouve régulièrement des fragments de matières plastiques dans les estomacs de poissons et cétacés. Si la collecte sélective de déchets domestiques empêche le dépôt de matières plastiques en décharge, elle génère aussi des stockages de plus en plus importants de matières plastiques, si on ne les utilisent pas comme combustible dans les incinérateurs. Il est bien connu que l'incinération de tels déchets pose d'énormes difficultés au niveau du contrôle de pollution atmosphérique et de la production de cendres volantes.

Le document WO94/21435 décrit un procédé pour façonner des blocs de dimensions stables à partir de fragments de matières thermoplastiques et notamment des matières recyclées, comme des chutes résultant de procédés industriels ou des résidus triés ou non du marché de la consommation. Selon ce document, on comprime un mélange de polymères, on le contraint sous charge dans un volume déterminé et on transperce le volume comprimé avec des pointes chauffées à une température supérieure au point de ramollissement d'au moins l'un des polymères contenu dans le mélange de manière à procurer une cohésion des matières sous contrainte constituant ledit bloc. On obtient ainsi des blocs de matières plastiques maintenues sous compression réglable en fonction des applications désirées, moyennant des soudures internes. Ces blocs ont trouvé application comme panneaux anti-bruit et en génie civil, notamment dans les travaux d'allègement des sols, de drainage, de support de fondations et soubassements d'ouvrages et de constructions sur sols instables. Toutefois le procédé décrit dans WO94/21435 n'est pas un procédé en continu et, par ailleurs, il ne convient que pour des matières plastiques thermo-fusibles même si on peut tolérer l'inclusion de très faibles quantités de petits fragments de matières autres, comme du bois ou des pièces métalliques, pour autant que l'enfoncement des pointes chauffées ne soit pas entravé. Notons que l'inclusion de matières non thermo-fusibles perturbe la cohésion des blocs et affecte ainsi la résistance de ceux-ci. Cette technique est surtout bien adaptée aux déchets plastiques semi-rigides, de type bouteilles, flacons et similaires.

Le document DE-4117797 décrit un procédé de fabrication de panneaux de construction à partir de déchets de matières thermoplastiques sans fusion énergivore desdites matières plastiques. Les déchets de matières thermoplastiques sont écrasés et sont reliés tout en se chevauchant, par fusion ponctuelle à l'aide de pointes chauffantes, afin de former un panneau. La surface du panneau peut être lissée ou colmatée par application d'une couche supplémentaire d'une suspension de cendres volantes durcissable hydrauliquement, avec ou sans ciment complémentaire. Pour ce faire, on peut aussi utiliser une couche supplémentaire de matières moussantes, comme une mousse de polyuréthane. Ce lissage peut aussi s'effectuer par un traitement de surface thermique, de courte durée. Il est également prévu d'y appliquer sur une face une feuille ou un tissé qui peut être fixé de manière ponctuelle. On y décrit aussi la liaison de deux panneaux superposés par fusion ponctuelle à l'aide de pointes chauffantes. Comme dans le cas précédent, le procédé n'est pas en continu et ne convient pas à toutes les matières plastiques, même si certaines inclusions d'impuretés peuvent être tolérées. Il semblerait que ce procédé n'a finalement jamais été mis en pratique industriellement à ce jour.

Un but de la présente invention consiste à fournir un matelas en matière plastique, à base de matières thermoplastiques, notamment de recyclage, de rejet et/ou de rebut, qui peut néanmoins comporter une certaine quantité de matières plastiques non thermo-fusibles, comme des matières thermodurcissables ou des matières cellulosiques par exemple. Les matières thermoplastiques peuvent être des matières thermoplastiques de récupération, usagées ou non, provenant de chutes de production de procédés industriels, de déchets, rejets ou rebuts ou des résidus triés ou non du marché de la consommation.

Un autre but consiste à fournir un tel matelas dont la rigidité peut être contrôlée ou adaptée en fonction de l'usage et la matière utilisée.

Un autre but de la présente invention vise à fournir un procédé de fabrication en continu de tels matelas en matière thermoplastique, quelle que soit leur forme ou leur taille.

L'invention concerne encore diverses utilisations des matelas de l'invention.

Selon un premier aspect, l'invention concerne un matelas stable en matière plastique, selon la revendication 1.

Avantageusement, le cœur du matelas de l'invention comporte des matières de récupération et/ou de rebut, plus particulièrement des chutes de matières résultant de procédés industriels et/ou des résidus triés ou non, issus du marché de la consommation et/ou des matières plastiques récupérées du « septième continent ». Il peut alterner matières thermofusibles et d'autres matières.

Le cœur peut consister en des matières diverses, éventuellement mélangées et même relativement souillées. Il peut s'agir de matières qui dans d'autres procédés seraient incompatibles.

Le matelas de l'invention peut être utilisé en tant que tel comme décrit ci-dessous ou être coupé en plaques ou blocs stables de plus petites dimensions, selon les applications recherchées.

Le matelas de l'invention permet l'inclusion de matières non-thermoplastiques, comme par exemple des matières thermodurcissables. Selon les applications envisagées, il peut comporter 40 % en poids ou 30 % en poids, de préférence jusqu'à 25 % en poids de ces matières, tout particulièrement de l'ordre de 15 % en poids de matières non-thermoplastiques, sans que la cohésion du cœur ne soit significativement affectée. La croute résultant d'une thermo-fusion en surface et/ou l'enveloppe solidarisée au cœur en matières thermoplastiques compactées permet de maintenir en place les fragments de matières non-thermoplastiques qui ne sont donc pas soudées aux matières adjacentes du cœur du matelas mais qui sont écrasées entre d'autres fragments de matière plastique, et participe ainsi à la stabilité du bloc de l'invention.

La croute consiste en une thermo-fusion en surface, continue ou ajourée, par exemple sous forme de treillis ou quadrillage ou d'une plaque ajourée, des matières plastiques thermo-fusible qui se trouvent aux surfaces du matelas. On peut aussi noyer une armature dans la croute lors de sa formation par thermo-fusion. La croute, une fois rigidifiée, participe à la cohésion du matelas tout en empêchant la perte de particules non fusibles.

L'enveloppe consiste en une feuille thermoplastique qui peut être renforcée, notamment par une armature comme des fibres naturelles (par exemple en coton), synthétiques (par exemple polyester) ou minérales (par exemple fibres de verre), tissées ou non tissées. Le choix de l'enveloppe dépend de l'application envisagée. Dans le cas d'une utilisation dans laquelle le matelas n'est soumis qu'à faibles charges, on peut prévoir une enveloppe moins résistante que dans des applications dans lesquelles le matelas est soumis à des sollicitations importantes, notamment avec répartition de charges élevées. Dans ce dernier cas, on préfère utiliser une enveloppe renforcée ou armée.

On peut aussi prévoir une enveloppe en matière plastique thermo-rétractable. Celle-ci est destinée à participer à la cohésion du matelas, en association avec les thermo-soudures, et à empêcher la perte de particules ou éléments non-thermofusibles. Elle est agencée de manière à participer aux caractéristiques esthétiques définitives et dimensionnelles précises.

On peut encore prévoir, à titre d'enveloppe, des films laminés complexes , éventuellement renforcés par des tissés ou non tissés, connus en soi.

Selon une variante non-revendiquée, on peut aussi prévoir à titre d'enveloppe une pellicule essentiellement continue ou ajourée formée par thermo-fusion superficielle de l'une au moins des surfaces du matelas obtenu. Cette thermo-fusion peut s'effectuer par des plaques chauffantes, éventuellement ajourées, ou par des treillis ou quadrillages en fil chauffant qui ramollissent et soudent en surface externe du matelas, les particules thermo-fusibles positionnées en surface de ce dernier. Dans le cas d'un treillis ou quadrillage, par exemple, on peut prévoir des fils chauffants en registre avec les points ou canaux de thermofusion ponctuelle interne.

Selon une autre forme d'exécution de l'invention, on peut prévoir un matelas constitué d'au moins deux matelas susmentionnés superposés et reliés entre eux par collage, y compris thermocollage ou collage moyennant une colle adéquate à base de mousse thermodurcissable ou thermoplastique, ou par thermo-fusion ponctuelle. On comprend aisément que dans ce cas la croute et/ou l'enveloppe thermoplastique joue un rôle essentiel dans l'assemblage des couches.

Dans ce cas, on peut aussi prévoir d'inclure des fragments de matière non thermoplastiques entre les couches. Ces matières sont alors tenues en place par le collage ou la soudure des croutes ou enveloppes de deux couches superposées. Ceci offre une possibilité d'utilisation de telles matières qui à ce jour risquent de se retrouver en décharge ou comme combustible dans les incinérateurs.

Dans le cadre de la présente description, on entend par « thermo-fusion ponctuelle » un apport d'énergie localisé de manière à porter la matière thermoplastique localement à une température supérieure à son point de ramollissement de sorte à la coller ou la souder à un fragment de matière adjacent. Il est bien entendu qu'une solidarisation ou soudure entre matières ne se produit qu'entre matières thermoplastiques fondues.

Selon l'invention, la thermo-fusion ponctuelle interne peut être obtenue par enfoncement dans la masse de pointes portées à une température supérieure au point de ramollissement d'au moins une des matières thermoplastiques en présence. Avantageusement, la température des pointes est supérieure au point de ramollissement de toutes les matières thermofusibles en présence. Selon une forme d'exécution préférée, la température des pointes de fusion est d'au moins 10 °C, plus particulièrement d'au moins 20 °C, de préférence d'au moins 30 à 40°C supérieure au point de ramollissement de la matière thermofusible en présence qui a le point de ramollissement le plus élevé.

La présente invention est également définie par un procédé selon la revendication 5. Selon un autre aspect, non-revendiqué, est divulgué un procédé en continu pour la fabrication de matelas tels que décrits ci-dessus. Selon une première forme d'exécution du procédé de l'invention, on dépose et répartit sur une bande transporteuse ou surface de travail un mélange comportant des fragments de matières thermoplastiques, on fait passer le lit de matière sous presse qui comprime le lit de matière à une densité voulue, on effectue des thermofusions ponctuelles internes et on forme éventuellement une croute par thermofusion en surface, et on maintien la compression jusqu'à refroidissement au moins partiel du matelas.

La croute obtenue par thermo-fusion en surface peut consister en une croute essentiellement continue ou ajourée. Dans ce dernier cas, elle peut prendre essentiellement la forme d'un treillis ou quadrillage, notamment en registre avec les thermo-fusions ponctuelles internes. Il est bien entendu qu'on forme avantageusement une croute sur au moins quatre surfaces du matelas, notamment les surfaces supérieure et inférieure et les surfaces latérales les reliant.

La croute peut encore comporter une armature, notamment en fibres textiles, plus particulièrement synthétiques, ou minérales, noyée dans la matière fondue.

La croute peut être formée avant, mais de préférence pendant ou après les thermo-fusions ponctuelles internes.

Selon l'invention, on dépose sur une bande transporteuse adéquate une feuille thermoplastique inférieure, on redresse la feuille thermoplastique inférieure de chaque côté de la bande transporteuse sur des parois latérales afin de former deux lèvres de recouvrement, on dépose et répartit sur la feuille thermoplastique inférieure un mélange comportant des fragments de matières thermoplastiques, on dépose une feuille thermoplastique supérieure sur le lit de matière, on fait passer le lit de matière sous presse qui comprime le lit de matière à une densité voulue, on effectue des thermofusions ponctuelles internes, et on maintien la compression jusqu'à refroidissement au moins partiel du matelas.

Selon l'invention, la thermofusion ponctuelle interne consiste à faire pénétrer dans le lit de matière comprimé des pointes chauffées à une température supérieure au point de ramollissement d'au moins une des matières thermoplastiques en présence.

Selon une forme d'exécution avantageuse, la presse est constituée par une surface d'appui inférieure, éventuellement des guides latéraux essentiellement verticaux, et une surface de compression supérieure. Avantageusement, la surface de compression est constituée par une base ajourée agencée pour être traversée par des pointes chauffantes, ladite base ajourée étant déplaçable verticalement dans un sens afin de comprimer un matelas de matière et, en sens inverse, de relâcher la pression. Ladite base ajourée peut être déplacée à l'aide d'un ou de plusieurs vérins, de préférence hydrauliques ou pneumatiques.

De préférence, la surface de compression est la base d'une cage parallélépipédique qui comporte la base ajourée, une base d'appui opposée à la base ajourée et reliée à celle-ci par des entretoises télescopiques, de préférence des vérins, la base d'appui servant d'appui à une multitude de pointes chauffantes agencées essentiellement perpendiculairement. Lorsqu'on approche la base d'appui de la base ajourée, on fait traverser ladite base ajourée par les pointes chauffantes et on fait pénétrer les pointes chauffantes dans le matelas de matières plastiques.

Selon une forme d'exécution particulièrement préférée, on peut prévoir que la surface d'appui de la presse est ajourée de manière à permettre le passage de pointes chauffantes. Dans ce cas, les pointes chauffantes peuvent traverser le lit de matières et la feuille d'enveloppe sans se heurter à la surface d'appui. On peut toutefois aussi prévoir des pointes chauffantes inférieures, actionnées sous la surface de transport du matelas de matières. On peut ainsi effectuer une thermofusion par le haut et/ou par le bas.

Il est bien entendu que d'autres formes d'exécution sont possibles selon lesquelles des thermofusions ponctuelles internes sont, en plus, pratiquées latéralement.

De préférence, les feuilles de matière thermoplastique sont déroulées sur la bande transporteuse et/ou sur le matelas de matière comprimé.

La température des pointes est avantageusement choisie selon les enseignements ci-dessus relatifs à la thermo-fusion ponctuelle.

Selon une forme d'exécution particulièrement préférée, on replie les lèvres de recouvrement sur la feuille thermoplastique supérieure avant pénétration dans le lit de matières compacté et comprimé de pointes chauffées à une température supérieure au point de ramollissement d'au moins une des matières thermoplastiques en présence.

Lorsque l'on cherche à générer une croute, les surfaces de conformage, notamment la surface d'appui, la surface de compression et de préférence aussi les surfaces latérales sont chauffées.

Lorsque l'on cherche à obtenir une crouté munie d'une armature, on peut remplacer la feuille thermoplastique dans le procédé ci-dessus par un tissé par exemple.

On obtient ainsi un matelas stable de matières plastiques comprimées et enveloppées d'un « boyau » thermofusible, matelas dont la cohésion interne est largement assurée par des thermo-fusions ou thermo-soudures ponctuelles internes, pour diverses applications telles que décrites ci-dessous à titre d'exemple.

Comme déjà expliqué ci-dessus, le procédé utilise avantageusement des matières de récupération et/ou de rebut, plus particulièrement des chutes de matières résultant de procédés industriels et/ou des résidus triés ou non, issus du marché de la consommation et/ou des matières plastiques récupérées du « septième continent ». Afin de garantir une qualité la plus constante possible du produit, il est avantageux de prévoir une étape de pesage et/ou dosage des matières premières et/ou d'homogénéisation du mélange. Les matières thermoplastiques peuvent être compactées à une température comprise entre la température ambiante et 1000 °C, de préférence entre 20 °C et 30 °C.

Le procédé comprend l'introduction dans la masse de pointes portées à une température supérieure à la température de ramollissement d'une partie au moins des matières plastiques en présence. Ces pointes créent des canaux à travers la masse du matelas, canaux dont les parois sont au moins partiellement, de préférence majoritairement, formées par des matières thermoplastiques soudées entre elles. On obtient ainsi une cohésion des fragments de matière par thermo-fusion ou soudure ponctuelle interne. Ces canaux ainsi formés assurent la résistance à la compression et la cohésion élastique interne du matelas. On peut ainsi réaliser un produit dont on maitrise parfaitement le module d'élasticité en jouant sur la mise en contrainte de la masse du matelas durant le procédé tout en jouant sur l'épaisseur des canaux assurant la soudure interne des matières.

Le procédé ne nécessite pas de préparation particulière de la matière première. Comme déjà mentionné, on peut utiliser des matières plastiques de rebut même à l'état souillé sans lavage. Il n'est pas non plus nécessaire de formuler ou reformuler un mélange récupéré. En effet, le mélange de matière thermoplastiques peut comporter jusqu'à 40 % en poids de fragments de matière non-thermoplastiques, avantageusement jusqu'à 30 % en poids, de préférence jusqu'à 25 % en poids et plus particulièrement de l'ordre de 15 % en poids de matières non-thermoplastiques. Il s'agit essentiellement de matières plastiques thermodurcissables, bien que des impuretés de bois ou de métaux de faibles dimensions peuvent être tolérées. Il est bien entendu que les fragments non-thermoplastiques doivent rester dans des limites dimensionnelles acceptables.

Dans certaines applications, notamment en agriculture, on peut prévoir l'inclusion de matières organiques, telles que fibres naturelles éventuellement imbibées ou saturées d'engrais ou d'autres matières favorisant la croissance de plantes, tel que le biochar (charbon de bois à usage agricole).

L'homme de l'art comprendra aisément que la distance entre pointes chauffées est réglée en fonction de la dimension moyenne des particules et en fonction de l'application recherchée, ou plutôt de la résistance mécanique voulue. Si chaque particule thermo-fusible est « prise » par une pointe chauffée, on obtient une cohésion importante entre particules du matelas. Si l'on rapproche encore les pointes chauffées, l'augmentation de cohésion et rigidité n'est probablement plus en rapport avec les dépenses énergétiques requises. Au fur et à mesure que l'on éloigne les pointes chauffées et/ou que l'on inclut des matières non-fusibles, la cohésion diminue. L'homme de l'art adaptera les dimensions de particules et la distance entre pointes chauffées aux exigences mécaniques et applications correspondantes. A titre d'exemple, on peut prévoir 10-12 pointes chauffées par mètre pour des dimensions de particules thermo-fusibles de l'ordre de 7-8 cm, et ce pour des applications de génie civil exigeant des répartitions de charges importantes.

Il est entendu que l'enveloppe, c'est-à-dire une feuille thermoplastique solidarisée au cœur du matelas par aiguilletage et/ou la croûte de thermofusion en surface, participe aussi à la cohésion et aux caractéristiques dimensionnelles de celui-ci. Par ailleurs, elle assure également le maintien dans le cœur du matelas des matières non-thermoplastiques qui de par leur nature ne sont pas soudées dans la masse et qui sans la présence de l'enveloppe auraient tendance à s'échapper du matelas.

La dimension des pointes sera adaptée à l'épaisseur du matelas et à la dimension des particules. A titre d'exemple, on peut prévoir des pointes de diamètre allant de 1 à 10 cm, de préférence de 1,5 à 5 cm. A titre d'exemple, pour des particules de 7 - 10 cm, des pointes de l'ordre de 30 mm de diamètre sont tout-à-fait adaptées.

Selon une forme d'exécution avantageuse, on peut prévoir les dimensions des pointes de manière à former des canaux au travers du matelas de matière qui permettent le passage de moyens de fixation ou de serrage, notamment de câbles de fixation, d'assemblage ou de compression, ou le coulage de bétons de renforcement.

De manière similaire, on règlera le nombre de pointes en fonction de l'application envisagée. A titre d'exemple, pour une application en génie civil, notamment la stabilisation d'un terrain sous une voie ferrée, on a prévu environ 95 pointes de 30 mm par m².

Les matelas de l'invention peuvent servir de sous-bassement pour routes, trottoirs ou bâtiments préfabriqués. On peut couler sur une base constituée d'une ou de plusieurs matelas de l'invention, une dalle de béton, de préférence armé, constituant ainsi une route, une piste cyclable ou un trottoir ou des éléments préfabriqués de route ou de trottoir ou de piste cyclable. Dans ce cas, les canaux formés par les pointes chauffées constituent de bons points d'ancrage de la dalle de béton.

Les matelas de l'invention ou des blocs tranchés dans celui-ci peuvent également servir de substrat de croissance de végétaux ou de base de sol arable, notamment dans des zones désertiques. Dans ce cas, il est avantageux de perforer l'enveloppe supérieure. Elle permet ainsi aux végétaux de pénétrer à l'aide de leur système racinaire au cœur du matelas qui peut être pourvu de matières organiques, comme des substrats ou fibres organiques et/ou de nutriments, et/ou parcouru par les eaux de ruissellement. Lors de la fabrication des matelas destinés à cette application, on peut régler le nombre de thermo-soudures ponctuelles par unité de surface de manière à favoriser l'apport d'eau et de nutriments.

D'autres applications dans le domaine du génie civil, consistent à utiliser les matelas de l'invention ou des blocs tranchés dans celui-ci pour la répartition des charges dans le cas de sols meubles, instables ou marécageux, la stabilisation de remblais ou de sols instables, protection antisismiques de fondations de constructions et constitution de ballasts absorbants de voies ferrées.

Finalement, les matelas ou des éléments découpés dans celui-ci peuvent servir à la fabrication de panneaux isolants thermiques et/ou acoustiques. Le matelas se compose de matières ayant une conductibilité thermique réduite et emprisonne de l'air dans des espaces réduits. Il constitue donc un excellent isolant thermique. Par ailleurs, cette structure de matière comportant en alternance sur une ligne traversant le matelas de l'invention, des espaces remplis d'air et des matières semi-rigides convient particulièrement bien pour l'absorption de vibrations sonores et donc comme isolant acoustique. Il est bien entendu que dans ce type d'application, on peut augmenter l'inclusion de matières non thermoplastiques et/ou diminuer la résistance mécanique de l'enveloppe, étant donné que les sollicitations auxquelles sont soumises ces panneaux sont relativement limitées.

La présente invention est décrite plus en détails ci-dessous, à l'appui de dessins dans lesquels :
La figure 1 représente une vue en coupe au travers d'un matelas selon l'invention;
La figure 2 est une vue en coupe d'une forme d'exécution particulière d'un matelas selon l'invention ;
La figure 3 est une vue en élévation d'une installation de fabrication d'un matelas selon l'invention ; et
La figure 4 est une vue latérale de l'installation de la figure 3.

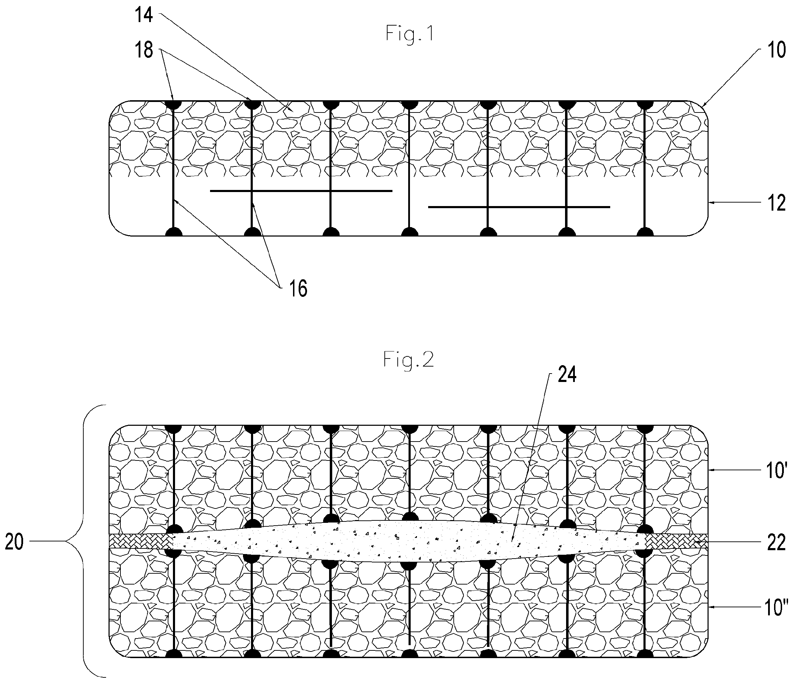

La coupe de la figure 1 montre un matelas 10 comportant une enveloppe thermoplastique 12 et un cœur de matières plastiques comprimées 14. Celles-ci se composent d'un mélange de matières thermoplastiques et d'autres matières, y compris des matières plastiques thermodurcissables, comme décrit ci-dessus. La cohésion du cœur est assurée par thermo-fusion ponctuelle interne représentée à la figure par les trajectoires verticales 16. L'enveloppe thermoplastique 12 est avantageusement solidarisée au cœur par thermo-fusion ou soudure, représentée par les points de fusion 18.

Comme mentionné ci-dessus, le cœur comporte des matières plastiques de récupération et/ou de rebut, comme des chutes de matières résultant de procédés industriels et/ou des résidus triés ou non issus du marché de la consommation et/ou des matières récupérées du septième continent. Il est bien entendu que ce sont les matières thermoplastiques qui assurent en partie au moins la cohésion du matelas par thermo-fusion. On peut néanmoins prévoir jusqu'à 40 % en poids de matières non-thermo-fusibles, comme notamment des matières thermodurcissables, de préférence jusqu'à 30 % en poids, tout particulièrement jusqu'à 25 % en poids, par exemple de l'ordre de 15 % en poids de ces matières, selon les applications envisagées.

La compression et l'imbrication des diverses pièces qui en résulte favorisent également la cohésion du cœur 14. Par ailleurs, l'enveloppe 12 qui enserre les matières comme dans un boyau renforce ou consolide encore l'ensemble, empêchant la perte de matières non-thermo-fusibles.

Les matières constituant le cœur 14 du matelas 10 de l'invention consistent avantageusement en des matières plastiques de récupération et/ou de rebut, plus particulièrement des chutes de matières résultant de procédés industriels et/ou des résidus triés ou non, issus du marché de la consommation et/ou des matières plastiques récupérées du « septième continent ». Il peut alterner matières thermo-fusibles et d'autres matières.

L'enveloppe 12 consiste en une feuille thermoplastique qui, selon les applications envisagées, peut être renforcée, notamment par une armature comme des fibres naturelles (par exemple en coton), synthétiques (par exemple polyester) ou minérales (par exemple fibres de verre). L'homme de l'art adaptera le choix de la feuille d'enveloppe aux applications envisagées.

Selon une forme d'exécution représentée à la figure 2, on peut prévoir un matelas 20 constitué d'au moins deux matelas 10' et 10" susmentionnés superposés et reliés entre eux par collage, y compris thermocollage ou collage moyennant une colle adéquate à base de mousse thermodurcissable ou thermoplastique, ou par thermo-fusion ponctuelle 22. On comprend aisément que dans ce cas l'enveloppe thermoplastique joue un rôle essentiel dans l'assemblage des couches. Dans ce cas, on peut aussi prévoir d'inclure des fragments de matière et notamment des fragments de matière non thermoplastiques 24 entre les couches ou matelas. Ces matières sont alors tenues en place par le collage ou la soudure des enveloppes de deux matelas superposés.

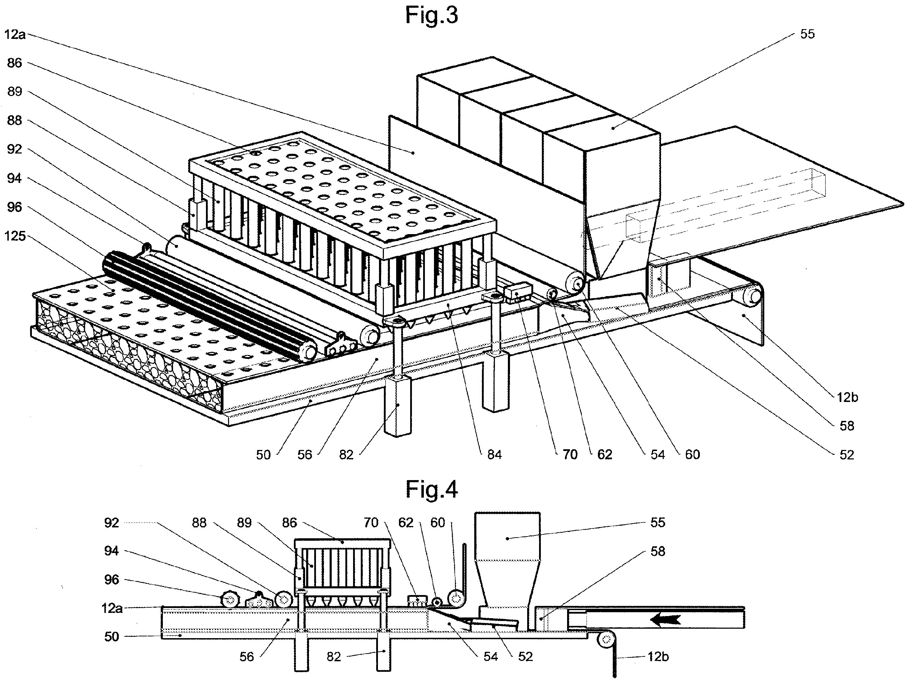

Les figures 3 et 4 montrent schématiquement une installation pour la fabrication en continu d'un matelas selon l'invention. L'installation comporte un bâti non représenté équipé d'une surface de travail, par exemple une surface de travail fixe équipée de chaines ou autre moyens de transport longitudinal, ou bande transporteuse sur laquelle on peut dérouler une feuille d'enveloppe thermo-fusible 12a. Dans le mouvement d'avancement de la feuille d'enveloppe 12a, ses deux extrémités latérales sont repliées vers le haut dans un guide de redressement 52 agencé de chaque côté de la bande transporteuse. A l'endroit des guides de redressement 52, une trémie 55 est agencée au-dessus de la bande transporteuse ou de la surface de travail. Elle permet de charger et répartir sur la feuille d'enveloppe 12a les matières plastiques qui constitueront le cœur 14 du matelas de l'invention. La trémie 55 peut être compartimentée de manière à pouvoir charger des matières ou mélanges de matières différents selon la largeur du matelas. Un moyen de compression 58 est prévu en amont de la trémie afin de comprimer les matières dans la direction longitudinale, d'éviter l'étalement des matières plastiques et de garantir une mise en forme préalable du matelas à former et rigidifier. En aval de la trémie, on a agencé un applicateur 60 d'une feuille d'enveloppe supérieure 12b. L'applicateur 60 peut consister en un rouleau de renvoi de la feuille d'enveloppe 12b, qui sert avantageusement simultanément de rouleau de compression de la matière plastique déposée par la trémie sur la feuille d'enveloppe inférieure 12a. La pression sera choisie en fonction de la densité de matelas voulue, en fonction des applications. Il peut, par ailleurs être suivi d'un ou de plusieurs rouleaux de compression 62. Suite à cette compression, le cœur de matière se présente sous une forme compacte essentiellement monolithique grâce en partie à un frittage des divers fragments de matière. Les guides de redressement 52 sont suivis de guides de rabattement 54 qui rabattent le bout de l'extrémité redressée de la feuille inférieure 12a sur le dessus du cœur de matières comprimé, de préférence avant que la feuille d'enveloppe supérieure 12b ne soit déposée. Un dispositif de thermo-fusion ou thermo-soudure 70 vient assembler lesdites feuilles en formant un boyau enfermant les matières plastiques comprimées qui forment le cœur du matelas de l'invention. En aval du dispositif de thermo-fusion 70, on a agencé un dispositif de thermo-fusion ponctuelle interne 80 des matières plastiques thermo-fusibles du cœur du matelas. Celui-ci peut encore être suivi de moyens de compression 92, 94, 96 qui permettent de maintenir le matelas formé sous compression le temps que les points de thermo-fusion se sont refroidis et/ou solidifiés.

Le dispositif de thermo-fusion 80 est monté sur des vérins 82 qui permettent de le relever ou de l'abaisser. Il consiste avantageusement en une base ajourée 84 et une base d'appui 86 reliée à la base ajourée 84 par des entretoises 88, de préférence des vérins. La base d'appui porte des pointes chauffantes montées essentiellement perpendiculairement, en registre avec les ouvertures de la base ajourée.

On peut encore prévoir un deuxième dispositif de fusion ponctuelle interne 80 sous la surface de travail 50, afin de pouvoir agir moyennant l'un ou l'autre ou les deux dispositifs simultanément.

Lorsque la matière pré-comprimée par les rouleaux 60 et/ou 62 arrive à hauteur du dispositif de the thermofusion ponctuelle interne, on interrompt le déplacement longitudinal du lit de matière et on abaisse la base ajourée moyennant les vérins 82 tout en comprimant le lit de matière qui se trouve ainsi comprimé entre la surface d'appui 50, la base ajourée 84, les guides latéraux 56 et le moyen de compression 58. On peut à présent abaisser la base d'appui 86 qui porte une multitude de pointes chauffantes 89 orientées vers le lit de matières. Celles-ci s'enfoncent alors dans le lit de matière en créant des thermofusions ponctuelles dans le cœur de la matière. Si la surface d'appui 50 est également ajourée, les pointes peuvent aisément traverser le matelas et son enveloppe.

Les pointes chauffantes sont portées à une température de travail supérieure à la température de ramollissement d'une partie au moins des fragments de polymères du cœur du matelas. Ces pointes chauffantes créent des canaux à travers la masse du matelas, qui lient les divers fragments ou éléments entre eux et/ou rigidifient et/ou maintiennent en forme les matelas. Lors du retrait des pointes chauffantes 89 par actionnement des vérins 88, ces dernières se nettoyent par le passage et frottement dans les canaux creusés par thermofusion.

On peut, bien entendu, prévoir des sondes qui déterminent la résistance rencontrées par les pointes chauffantes, et qui permettent d'augmenter la température ou de déclencher soit l'arrêt de l'enfoncement des pointes ou de la ou des pointes en question afin d'en empêcher la destruction ou l'usure prématurée, notamment lorsqu'elle rencontre un fragment de matière non plastique, comme du bois ou du métal. On peut aussi prévoir un débrayage mécanique qui s'enclenche en cas de résistance à l'enfoncement trop élevée.

Les pointes chauffantes sont avantageusement équipées de résistances électriques adéquates et d'un thermocouple à leur extrémité pénétrante afin de porter celle-ci à la température voulue et d'en surveiller et contrôler la température afin d'éviter des surchauffes et usures prématurées.

L'installation décrite ci-dessus permet la fabrication en continu de matelas décrits ci-dessus. On dépose sur la bande transporteuse une feuille thermoplastique inférieure, on redresse les lèvres de recouvrement de ladite feuille de chaque côté de la bande transporteuse sur des parois latérales, on dépose et répartit sur la feuille thermoplastique inférieure un mélange comportant des fragments de matières thermoplastiques, on dépose une feuille thermoplastique supérieure sur le lit de matière, on comprime le lit de matière à une densité voulue, et on pratique une thermo-fusion ponctuelle interne dans le lit de matière comprimé par enfoncement de pointes chauffées à une température supérieure au point de ramollissement d'au moins une des matières thermoplastiques en présence et on maintien la compression jusqu'à refroidissement au moins partiel.

Les pointes chauffées peuvent encore être portées à température voulue de diverses manières essentiellement connues en soi. Ainsi, elle peuvent être amenées dans une ambiance chauffante, comme un liquide à température élevée, un gaz à température élevée, un rayonnement infra-rouge ou autre rayonnement provoquant une augmentation de température dans la masse de la pointe. Dans tous les cas, il est avantageux de prévoir un thermocouple afin de permettre la mesure et, de ce fait, le contrôle de la température.
On obtient ainsi un matelas comme décrit ci-dessus qui peut être tranché ou coupé en blocs de dimensions voulues et être utilisé comme décrit.

## Revendications

1. Matelas stable (10) en matière plastique, à base d'un mélange de matières thermoplastiques comportant un cœur de matières plastiques (14) compactées dont la cohésion est assurée par thermo-fusion ponctuelle interne (18), et une enveloppe consistant en une feuille thermoplastique (12) solidarisée au cœur par thermo-fusion ponctuelle, et éventuellement une croute résultant d'une thermo-fusion continue ou ajourée en surface du cœur de matières plastiques, ledit matelas en matière plastique comportant jusqu'à 40 % en poids de matières non-thermoplastiques.

2. Matelas selon la revendication 1 **caractérisé en ce que** le cœur (14) comporte des matières de récupération et/ou de rebut, comme des chutes de matières résultant de procédés industriels et/ou des résidus triés ou non issus du marché de la consommation et/ou des matières récupérées du septième continent.

3. Matelas selon la revendication 1 ou 2 comportant jusqu'à 40 % en poids, ou jusqu'à 30 % en poids, de préférence jusqu'à 25 % en poids, par exemple de l'ordre de 15 % en poids de matières thermodurcissables.

4. Matelas selon l'une des revendications 1 à 3 assemblé avec un autre matelas selon l'une des revendications 1 à 3, par collage (22), comme par exemple le thermocollage ou le collage moyennant une colle à base de mousse thermodurcissable ou thermoplastique, et/ou par thermo-fusion ponctuelle.

5. Procédé en continu pour la fabrication de matelas selon l'une des revendications précédentes, selon lequel on dépose sur une bande transporteuse adéquate (50) une feuille thermoplastique inférieure (12b), on redresse des lèvres de recouvrement de ladite feuille thermoplastique de chaque côté de la bande transporteuse sur des parois latérales (52,54), on dépose et répartit sur la feuille thermoplastique inférieure (12b) un mélange comportant des fragments de matières thermoplastiques, on dépose une feuille thermoplastique supérieure (12a) sur le lit de matière, on fait passer le lit de matière sous presse (60,62,84,92,94,96), qui comprime le lit de matière à une densité voulue, et on fait pénétrer dans le lit de matière comprimé des pointes chauffées (89) à une température supérieure au point de ramollissement d'au moins une des matières thermoplastiques en présence et on maintien la compression jusqu'à refroidissement au moins partiel.

6. Procédé selon la revendication 5 **caractérisé en ce que** les feuilles de matière thermoplastique (12a,12b) sont déroulées respectivement sur la bande transporteuse (50) et sur le matelas de matière.

7. Procédé selon la revendication 5 ou 6 **caractérisé en ce qu'**on dépose la feuille thermoplastique supérieure sur les lèvres de recouvrement avant pénétration dans le lit de matières comprimé de pointes chauffées à une température supérieure au point de ramollissement d'au moins une des matières thermoplastiques en présence.

8. Procédé selon l'une des revendications 5 à 7 **caractérisé en ce qu'**il comporte en amont une étape de pesage et/ou dosage des matières premières et/ou d'homogénéisation du mélange.

9. Procédé selon l'une des revendications 5 à 8 **caractérisé en ce que** les matières thermoplastiques sont compactées à une température comprise entre la température ambiante et 1000 °C, de préférence entre 20 °C et 30 °C.

10. Procédé selon la revendication 7 **caractérisé en ce que** la température des pointes chauffées est supérieure au point de ramollissement de toutes les matières thermofusibles en présence, de préférence, la température des pointes de fusion est d'au moins 10 °C, plus particulièrement d'au moins 20 °C, de préférence d'au moins 30 à 40 °C supérieure au point de ramollissement de la matière thermofusible en présence qui a le point de ramollissement le plus élevé.

11. Utilisation d'un matelas selon l'une des revendications 1 à 4 pour la fabrication de soubassements pour constructions de génie civil, y compris de routes, pistes cyclables ou trottoirs.

12. Utilisation d'un matelas selon l'une des revendications 1 à 4 pour la répartition des charges dans le cas de sols meubles, instables ou marécageux, la stabilisation de remblais ou de sols instables, protection antisismiques de fondations de constructions et constitution de ballasts absorbants de voies ferrées.

13. Utilisation d'un matelas selon l'une des revendications 1 à 4 pour la fabrication de panneaux isolants, notamment de panneaux isolants thermiques et/ou phoniques.

14. Utilisation d'un matelas selon l'une des revendications 1 à 4 pour la fabrication de substrats de croissance de végétaux ou de base de sol arable, éventuellement moyennant inclusion de matières organiques et/ou de nutriments, notamment dans le cœur du matelas.

15. Elément préfabriqué de route, de piste cyclable ou de trottoir comportant au moins un matelas selon l'une des revendications 1 à 4 et une couche de béton, hydraulique ou autre, de préférence armé, ancrée sur ledit matelas.

## Patentansprüche

1. Stabile Kunststoffmatratze (10) auf der Basis einer Mischung aus thermoplastischen Materialien mit einem Kern aus verdichteten Kunststoffen (14), deren Zusammenhalt durch innere punktförmig eingebrachte Thermofusion (18) gewährleistet wird, und einer Hülle, die aus einer thermoplastischen Folie (12), die mit dem Kern durch punktförmig eingebrachte Thermofusion fest verbunden ist, und gegebenenfalls einer Kruste besteht, die aus einer kontinuierlichen oder durchbrochenen Thermofusion an der Oberfläche des Kerns aus Kunststoffen resultiert, wobei die Kunststoffmatratze bis zu 40 Gew.-% nichtthermoplastische Materialien enthält.

2. Matratze nach Anspruch 1, **dadurch gekennzeichnet, dass** der Kern (14) Rückgewinnungs- und/oder Abfallmaterialien enthält, wie Materialabfälle aus industriellen Prozessen und/oder sortierte oder unsortierte Abfälle aus dem Verbrauchermarkt und/oder vom siebten Kontinent rückgewonnene Materialien enthält.

3. Matratze nach Anspruch 1 oder 2 mit bis zu 40 Gew.-% oder bis zu 30 Gew.-%, vorzugsweise bis zu 25 Gew.-%, beispielsweise in der Größenordnung von 15 Gew.-%, an wärmehärtbaren Materialien.

4. Matratze nach einem der Ansprüche 1 bis 3, die mit einer anderen Matratze nach einem der Ansprüche 1 bis 3 durch Kleben (22), wie z. B. Heißkleben oder Kleben mit einem wärmehärtenden oder thermoplastischen Schaumstoffkleber, und/oder durch punktförmig eingebrachte Thermofusion verbunden ist.

5. Kontinuierliches Verfahren zur Herstellung von Matratzen nach einem der vorhergehenden Ansprüche, wobei man auf einem geeigneten Förderband (50) eine untere thermoplastische Folie (12b) ablegt, die Decklippen der thermoplastischen Folie auf jeder Seite des Förderbandes an Seitenwänden (52, 54) aufrichtet, eine Mischung, die Fragmente von thermoplastischen Materialien umfasst, auf die untere thermoplastische Folie (12b) ablegt und verteilt, eine obere thermoplastische Folie (12a) auf das Materialbett legt, das Materialbett unter eine Presse (60, 62, 84, 92, 94, 96) leitet, die das Materialbett auf eine gewünschte Dichte komprimiert, und in das komprimierte Materialbett Spitzen (89) einführt, die auf eine Temperatur oberhalb des Erweichungspunkts mindestens eines der vorhandenen thermoplastischen Materialien erhitzt, und die Kompression bis zur zumindest teilweisen Abkühlung aufrechterhält.

6. Verfahren nach Anspruch 5, **dadurch gekennzeichnet, dass** die thermoplastischen Folien (12a, 12b) auf dem Förderband (50) bzw. auf der Materialmatratze abgewickelt werden.

7. Verfahren nach Anspruch 5 oder 6, **dadurch gekennzeichnet, dass** die obere thermoplastische Folie auf den Decklippen abgelegt wird, bevor in das Bett aus komprimiertem Material Spitzen eingebracht werden, die auf eine Temperatur oberhalb des Erweichungspunkts von mindestens einem der vorhandenen thermoplastischen Kunststoffe erhitzt werden.

8. Verfahren nach einem der Ansprüche 5 bis 7, **dadurch gekennzeichnet, dass** es einen vorgeschalteten Schritt des Wiegens und/oder Dosierens der Rohstoffe und/oder des Homogenisierens der Mischung umfasst.

9. Verfahren nach einem der Ansprüche 5 bis 8, **dadurch gekennzeichnet, dass** die thermoplastischen Materialien bei einer Temperatur zwischen Raumtemperatur und 1000 °C, vorzugsweise zwischen 20 °C und 30 °C, kompaktiert werden.

10. Verfahren nach Anspruch 7, **dadurch gekennzeichnet, dass** die Temperatur der erhitzten Spitzen höher ist als der Erweichungspunkt aller vorhandenen thermoplastischen Materialien, wobei die Temperatur der Schmelzspitzen vorzugsweise mindestens 10 °C, besonders bevorzugt mindestens 20 °C, besonders bevorzugt mindestens 30 bis 40 °C höher als der Erweichungspunkt des vorhandenen thermoplastischen Materials ist, das den höchsten Erweichungspunkt hat.

11. Verwendung einer Matte nach einem der Ansprüche 1 bis 4 zur Herstellung von Unterbauten für Hoch- und Tiefbaukonstruktionen, einschließlich Straßen, Radwegen oder Gehwegen.

12. Verwendung einer Matte nach einem der Ansprüche 1 bis 4 zur Lastverteilung bei lockeren, instabilen oder sumpfigen Böden, zur Stabilisierung von Aufschüttungen oder instabilen Böden, zum Erdbebenschutz von Gebäudefundamenten und zur Bildung von absorbierenden Bettungen für Eisenbahngleise.

13. Verwendung einer Matte nach einem der Ansprüche 1 bis 4 zur Herstellung von Dämmplatten, insbesondere von Wärme- und/oder Schalldämmplatten.

14. Verwendung einer Matratze nach einem der Ansprüche 1 bis 4 zur Herstellung von Substraten für das Pflanzenwachstum oder als Grundlage für Ackerboden, gegebenenfalls unter Einschluss von organischen Stoffen und/oder Nährstoffen, insbesondere im Kern der Matratze.

15. Vorgefertigtes Straßen-, Radweg- oder Gehwegelement mit mindestens einer Matratze nach einem der Ansprüche 1 bis 4 und einer auf der Matratze verankerten Schicht aus hydraulischem oder anderem, vorzugsweise bewehrtem, Beton.

## Claims

1. Stable mattress (10) of plastics material, based on a mixture of thermoplastic materials comprising a core of compacted plastics materials (14), the cohesion of which is ensured by internal spot thermo-fusion (18), and an envelope consisting of a thermoplastic sheet (12) secured to the core by spot thermo-fusion, and optionally a crust resulting from a continuous or perforated thermo-fusion on the surface of the core of plastics materials, the said mattress of plastics material comprising up to 40% by weight of non-thermoplastic materials.

2. Mattress according to claim 1, **characterised in that** the core (14) comprises recovered and/or waste materials, such as offcuts from industrial processes and/or sorted or unsorted waste from the consumer market and/or materials recovered from the seventh continent.

3. Mattress according to claim 1 or 2 comprising up to 40% by weight, or up to 30% by weight, preferably up to 25% by weight, for example of the order of 15% by weight of thermosetting materials.

4. Mattress according to one of claims 1 to 3 assembled with another mattress according to one of claims 1 to 3, by gluing (22), such as for example thermobonding or gluing using a thermosetting or thermoplastic foam-based adhesive, and/or by spot thermo-fusion.

5. Continuous process for the manufacture of mattresses according to one of the preceding claims, wherein a lower thermoplastic sheet (12b) is deposited on a suitable conveyor belt (50), lips covering the said thermoplastic sheet on each side of the conveyor belt are straightened on side walls (52, 54), a mixture comprising fragments of thermoplastic materials is deposited and distributed on the lower thermoplastic sheet (12b), an upper thermoplastic sheet (12a) is deposited on the bed of material, the bed of material is passed under a press (60, 62, 84, 92, 94, 96), which compresses the bed of material to a desired density, and spikes (89) heated to a temperature above the softening point of at least one of the thermoplastic materials present are caused to penetrate into the compressed bed of material and compression is maintained until at least partial cooling.

6. Method according to claim 5, **characterised in that** the sheets of thermoplastic material (12a, 12b) are unwound respectively on the conveyor belt (50) and on the mat of material.

7. Process according to claim 5 or 6, **characterized in that** the upper thermoplastic sheet is deposited on the covering lips before spikes heated to a temperature above the softening point of at least one of the thermoplastic materials present penetrate into the bed of compressed materials.

8. Process according to one of claims 5 to 7, **characterized in that** it comprises, upstream, a step of weighing and/or metering the raw materials and/or homogenizing the mixture.

9. Process according to one of claims 5 to 8, **characterized in that** the thermoplastic materials are compacted at a temperature of between ambient temperature and 1000°C, preferably between 20°C and 30°C.

10. Process according to claim 7, **characterized in that** the temperature of the heated spikes is higher than the softening point of all the thermoplastic materials present, preferably the temperature of the melting spikes is at least 10°C, more particularly at least 20°C, preferably at least 30 to 40°C higher than the softening point of the thermoplastic material present which has the highest softening point.

11. Use of a mat according to one of claims 1 to 4 for the manufacture of sub-bases for civil engineering constructions, including roads, cycle paths or pavements.

12. Use of a mat according to one of claims 1 to 4 for the distribution of loads in the case of loose, unstable or marshy soils, the stabilisation of embankments or unstable soils, antiseismic protection of building foundations and the formation of absorbent ballast for railways.

13. Use of a mat according to one of claims 1 to 4 for the manufacture of insulating panels, in particular thermal and/or sound insulating panels.

14. Use of a mat according to one of claims 1 to 4 for the manufacture of plant growth substrates or topsoil bases, optionally with the inclusion of organic matter and/or nutrients, in particular in the core of the mat.

15. Prefabricated road, cycleway or pavement element comprising at least one mat according to one of claims 1 to 4 and a layer of concrete, hydraulic or other, preferably reinforced, anchored on the said mat.
